# EUROPEAN PATENT APPLICATION

(11) **EP 4 657 987 A1**
(43) Date of publication of application: **03.12.2025**
(21) Application number: 24179043.5
(22) Date of filing: 30.05.2024
(51) Int. Cl.: H05B 7/144, F27B 3/28, H02M 5/00

(54) **ADAPTIVE VOLTAGE WAVEFORM FOR INCREASING POWER IN ELECTRICAL ARC FURNACES**

(71) Applicant: Hitachi Energy Ltd, 8050 Zürich (CH)
(72) Inventor: Rasmussen, Jon, 426 68 Västra Frölunda (SE); Hasler, Jean-Philippe, 722 44 Västerås (SE)
(74) Representative: AWA Sweden AB

(57) **Abstract**

There is provided an electric power supply apparatus for supplying power to an electric arc furnace, as well as a method of operating an electric arc furnace by means of an electric power supply apparatus. Said electric power supply apparatus comprises an electric arc furnace transformer, and a converter device. The converter device is configured to be connected at an input side to an AC grid and at an output side to said at least one electrode of the electric arc furnace via said electric arc furnace transformer. Said converter device is further configured to generate an output voltage Uₒᵤₜ comprising a complex waveform comprising alternating pulses, wherein a rise/fall time Tr of said pulses exceeds a predetermined rise/fall time threshold, and wherein RMS_Uₒᵤₜ > Uₚₑₐₖ/√2, where RMS_Uₒᵤₜ is the root mean square of the output voltage and Uₚₑₐₖ is the peak voltage of the output voltage.

## Description

### Technical field

The present disclosure relates to an apparatus and method for supplying power to an electric arc furnace.

### Background

Electric arc furnaces (EAF) are used for heating and melting metal by forming an arc between the material and an electrode of the EAF. Such an EAF may be powered by feeding an alternating voltage to the electrodes of the EAF. Around the zero-crossing of the supplied AC voltage, the voltage is low and below a critical voltage needed to ignite an arc between the electrode and the material. Thus, in each cycle of the supplied AC voltage, there may be a period without arc, at least in the beginning of a melting cycle of the EAF.

### Summary

In view of the above, an object of the present disclosure is to provide an improved apparatus and method for supplying power to an electric arc furnace.

According to a first aspect of the present inventive concept, there is provided an electric power supply apparatus for supplying power to an electric arc furnace, said electric arc furnace comprising at least one electrode. The electric power supply apparatus comprises an electric arc furnace transformer, and a converter device having an input side and an output side. The converter device is configured to be connected at said input side to an AC grid and at said output side to at least one electrode via said electric arc furnace transformer.

Said converter device is further configured to generate an output voltage Uₒᵤₜ comprising a complex waveform comprising alternating pulses, wherein a rise/fall time Tr of said pulses exceeds a predetermined rise/fall time threshold, and wherein RMS_Uₒᵤₜ > Uₚₑₐₖ/√2, where RMS_Uₒᵤₜ is the root mean square of the output voltage and Uₚₑₐₖ is the peak voltage of the output voltage.

Such a configuration provides control of the voltage being fed to the electrode of the EAF. The waveform of the output voltage Uₒᵤₜ provided by the converter device may be chosen to improve the melting process. The waveform of the output voltage Uₒᵤₜ may be adapted depending on the stage of the melting cycle of the EAF.

To obtain an RMS_Uₒᵤₜ > Uₚₑₐₖ/√2, the rise/fall time Tr is chosen such that the rate of change du/dt of the output voltage Uₒᵤₜ is larger around the zero-crossing than for a sinusoidal waveform. Thus, the period of time during which the output voltage is below a critical voltage needed to ignite an arc is decreased. In other words, the non-arcing period is decreased.

The waveform comprises alternating pulses, i.e., both positive and negative pulses. The rise/fall time of a pulse may for example be defined as the time taken by the output voltage Uₒᵤₜ to change from 10% to 90% of the peak voltage (rise) or from 90% to 10% of the peak voltage (fall). Other voltage thresholds for defining the rise/fall time are possible, such as 0% and 100%, 5% and 95%, or 15% and 85%, 20% and 80%, or any combinations of these lower and upper thresholds.

As the non-arcing period is decreased, the period of time during which an arc is formed and current flows through the electrode is increased. The total root mean square current at the electrode is thereby increased, i.e., the energy content of the arc is increased. With increased energy content in the arc, a more efficient melting is obtained. In turn, the total melting time of the material is reduced, and a higher production rate is achieved.

In this respect, for a given peak voltage, a square waveform may theoretically give the highest efficiency, but may not be the optimal waveform. This is due to a high du/dt, which may cause stress on insulation, for example dry insulated components, such as cables, cable terminations, epoxy-insulated components. This additional stress can result in reduced lifetime of the components, due to its high-frequency content.

Thus, the lower threshold for the rise/fall time Tr may be chosen at a level ensuring that the lifetime of the converter device and other components of the apparatus is not negatively affected by a high du/dt.

According to an example, the converter device may be configured to generate an output voltage Uₒᵤₜ comprising a complex waveform, wherein a non-arcing period t does not exceed a predetermined threshold, wherein said non-arcing period is a time period around each zero-crossing of said output voltage Uₒᵤₜ during which said output voltage is below a critical voltage needed to ignite an arc.

In the context of this disclosure, the output voltage Uₒᵤₜ being below a critical voltage refers to absolute values, with the output voltage being below the critical voltage, positive or negative, on respective sides of the zero-crossing.

That the converter device is configured to provide the output voltage to the electrode of the EAF via the EAF transformer allows for a lower current to be controlled. Reactive power towards the grid may also thereby be compensated.

Further, it should be noted that in this context, the critical voltage for the output voltage generated by the converter device and the critical electrode voltage needed to form an arc between the electrode and the material may be different, since the output voltage from the converter device is transformed by the EAF transformer prior to being applied to the electrode.

The complex waveform may be obtained by using a reference waveform. Thus, the converter controller may be configured to generate said output voltage Uₒᵤₜ such that the waveform of the output voltage Uₒᵤₜ corresponds to the reference waveform.

The complex waveform may be obtained by adding at least a 3^{rd} harmonic to a fundamental waveform. The fundamental waveform is sinusoidal. In other words, if no harmonics are added to the fundamental waveform, the output voltage has a sinusoidal waveform. By adding a 3^{rd} harmonic, the waveform of the output voltage is flattened. Thereby, the amplitude of the fundamental waveform can be increased, without the output voltage having a peak voltage exceeding the peak voltage of the unaltered fundamental waveform.

Avoiding high peak voltages is an advantage, as high peak voltages may result in flashovers or uncontrolled arcs towards the refractory of the EAF.

As a result of the flattened waveform, the rate of change du/dt around the zero-crossing is increased, and the period of time during which the output voltage is below the critical voltage is decreased.

According to at least one example embodiment, the complex waveform may comprise a number N of added harmonics and said number N does not exceed a predetermined threshold. In other words, the complex waveform may be obtained by adding N harmonics to said fundamental waveform.

Thus, according to an example, the complex waveform may be obtained by adding a 3^{rd} harmonic and one or a plurality of further harmonics, such that the total number of added harmonics is N.

Adding a plurality of harmonics may offer a greater control of the waveform so obtained.

According to an example, the complex waveform may be obtained by adding a plurality of uneven harmonics to the fundamental waveform.

According to at least one example embodiment, the predetermined threshold is 15.

The complex waveform may be obtained by adding a 3^{rd} and 5^{th} harmonic, or a 3^{rd} to 7^{th} harmonic, or a 3^{rd} to 9^{th} harmonic, or any combination of harmonics among the 3^{rd} to 15^{th} harmonics.

According to at least one example embodiment, the converter device is configured to operate with medium voltage AC input.

Thus, the converter device may be connected to the AC grid, optionally via a grid transformer, such that the input voltage provided to the converter device is medium voltage.

According to at least one example embodiment, the electric power supply apparatus further comprises a converter controller configured to control said output voltage Uₒᵤₜ. The converter controller may be configured to determine a converter reference voltage based at least on a desired electrode voltage and an electric arc furnace transformer impedance. The converter controller may further be configured to control said converter device to generate said output voltage Uₒᵤₜ based on the converter reference voltage.

The EAF may comprise an electrode controller, which electrode controller is configured to control and adjust a position of the electrode. The desired electrode voltage may be determined by the electrode controller. In turn, the arc length will be determined by the electrode voltage. Depending on the stage in the melting process, it may be desirable to limit the length of the arc.

The converter controller may thus be configured to receive the desired electrode voltage from the electrode controller.

According to at least one example embodiment, determining said converter reference voltage includes determining a set of parameters selected among a group comprising: said peak voltage Uₚₑₐₖ, said rise/fall time Tr, a fundamental frequency f, an amplitude of a fundamental waveform, one or a plurality of harmonics to be added to said fundamental waveform, and a respective amplitude for each harmonic to be added to said fundamental waveform.

For example, a reference waveform may be defined by the peak voltage Uₚₑₐₖ, rise/fall time Tr, and fundamental frequency f.

In configurations where the the complex waveform is obtained by adding at least a 3^{rd} harmonic to a fundamental waveform, the complex waveform may be defined by the fundamental frequency f and amplitude of the fundamental waveform, the harmonics to be added to the fundamental waveform, and a respective amplitude for each harmonic to be added to the fundamental waveform. The set of parameters may optionally comprise a respective phase angle for each harmonic.

According to at least an example embodiment, the set of parameters is variable over time during a melting cycle of said electric arc furnace.

Thus, the set of parameters may be repeatedly determined during the melting cycle of the EAF. The set of parameters may further be continuously determined during the melting cycle of the EAF. A real-time control of the melting process is thereby possible.

The lack of arcing around the zero-crossing is mainly a problem in the beginning of the melting cycle, when no, or only little, material has melted. Unlike in later stages, there is no plasma to keep the arc active. Therefore, the parameters may for example be determined such that the rise/fall time is short in the beginning of the melting cycle and longer in later stages. The shorter periods without arc in the beginning of the cycle increase the power available for melting the material. A quicker melting is thus achieved in the beginning of the cycle. Later, when there is less risk of arc interruption, a waveform with longer rise/fall time may be used. The risk of uncontrolled arcing with the refractory is also higher in the beginning of the melting cycle, when material may shift inside the refractory. In later stages, a higher voltage may be used.

According to at least one example embodiment, the converter device is configured to operate as a back-to-back converter.

According to at least one example embodiment, the converter device is configured to operate as a matrix converter.

According to a second aspect of the present disclosure, there is provided a method for operating an electric arc furnace by means of an electric power supply apparatus, said electric arc furnace comprising at least one electrode, wherein said electric power supply apparatus comprises an electric arc furnace transformer and a converter device having an input side and an output side, which converter device is configured to be connected at said input side to an AC grid and at said output side to said at least one electrode via said electric arc furnace transformer. The method comprises generating, by means of said converter device, an output voltage Uₒᵤₜ comprising a complex waveform comprising alternating pulses, wherein a rise/fall time Tr of said pulses exceeds a predetermined rise/fall time threshold, and wherein RMS_Uₒᵤₜ > Uₚₑₐₖ/√2, where RMS_Uₒᵤₜ is the root mean square of the output voltage and Uₚₑₐₖ is the peak voltage of the output voltage.

The method according to the second aspect may advantageously be performed by means of the apparatus according to the first aspect. Thus, the embodiments and advantages described in connection to the first aspect also apply to the method according to the second aspect.

Thus, according to at least one embodiment of the method, said complex waveform is obtained by using a reference waveform.

According to at least one embodiment of the method, said complex waveform is obtained by adding at least a 3^{rd} harmonic to a fundamental waveform.

According to at least one embodiment of the method, said complex waveform comprises a number N of added harmonics and said number N does not exceed a predetermined threshold.

According to at least one example embodiment of the method, the predetermined threshold is 15.

According to at least one example embodiment of the method, the converter device is configured to operate with medium voltage AC input.

According to at least one example embodiment of the method, the electric power supply apparatus further comprises a converter controller configured to control said output voltage Uₒᵤₜ, said method further comprising determining a converter reference voltage based at least on a desired electrode voltage and an electric arc furnace transformer impedance, and controlling said converter device to generate said output voltage Uₒᵤₜ based on said converter reference voltage.

According to at least one example embodiment of the method, determining said converter reference voltage includes determining a set of parameters selected among a group comprising said peak voltage Uₚₑₐₖ, said rise/fall time Tr, a fundamental frequency f, an amplitude of a fundamental waveform, one or a plurality of harmonics to be added to said fundamental waveform, and a respective amplitude for each harmonic to be added to said fundamental waveform. The set of parameters may optionally comprise a respective phase angle for each harmonic.

According to at least one example embodiment of the method, the set of parameters is variable over time during a melting cycle of the electric arc furnace.

### Brief description of the drawings

The inventive concept and exemplifying embodiments will now be further described with reference to the accompanying drawings, in which:
Fig. 1 is a block diagram of an apparatus for supplying power to an electric arc furnace according to the present disclosure;
Fig. 2a is a graph showing the electrode voltage and electrode current when the supplied voltage has sinusoidal waveform;
Fig. 2b is a graph showing the electrode voltage and electrode current when the supplied voltage has a square waveform;
Fig. 2c shows an example of a reference waveform according to the present inventive concept;
Fig. 2d is a graph showing the electrode voltage and electrode current when the supplied voltage comprises an added 3^{rd} harmonic; and
Fig. 2e is a graph showing the electrode voltage and electrode current when the supplied voltage comprises added 3^{rd} to 9^{th} harmonics.

### Detailed description

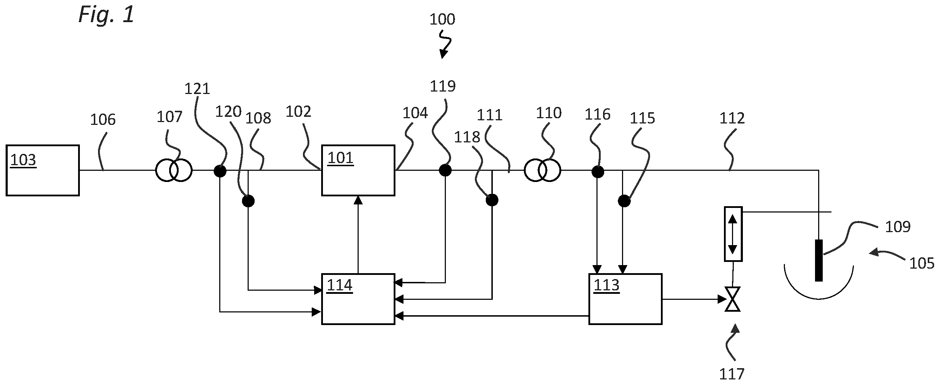

An exemplifying embodiment of an electric power supply apparatus 100 for supplying power to an electric arc furnace according to the present inventive concept is shown in the block diagram of Fig. 1.

The apparatus comprises a converter device 101 which is configured to be connected at its input side 102 to an AC grid 103. The converter device 101 is further configured to be connected at its output side 104 to an electric arc furnace (EAF) 105.

In the example of Fig. 1, the converter device 101 is connected to grid power lines 106 of the AC grid 103 via a grid transformer 107 and intermediate power lines 108 extending between the grid transformer 107 and the converter device 101. The converter device 101 may be configured to operate with medium voltage input.

The converter device 101 is connected at its output side 104 with electrodes 109 to the EAF, via an EAF transformer 110. Load power lines 111 extend between the converter device 101 and the EAF transformer 110, and electrode power lines 112 extend between the EAF transformer 110 and the electrodes 109.

An EAF electrode controller 113 is configured to control the position of the electrodes 109. In more detail, the electrode controller 113 is configured to control positioning means 117 to adjust the position of the electrodes 109. The EAF electrode controller 113 is further configured to determine a desired voltage of the electrode, also referred to as reference voltage. The voltage of the electrode will determine the arc length. Depending on the melting process, it is often desired to limit the arc length.

The present electrode voltage U_{EL} and the present electrode current I_{EL} may be measured by means of a suitable voltage measurement device 115 and current measurement device 116, respectively. The electrode controller 113 may use the present electrode voltage to adjust the reference voltage.

The apparatus 100 comprises a converter controller 114 which is configured to determine a converter reference voltage and to control the converter device 101 to generate an output voltage Uₒᵤₜ based on the converter reference voltage. In more detail, the converter controller 114 is configured to determine the converter reference voltage based at least on a desired electrode voltage and an EAF transformer impedance. Thus, the converter controller 114 may be configured to receive at least the desired electrode voltage/reference voltage from the electrode controller 113.

The converter controller 114 is thus configured to control the converter device 101 to provide the required output voltage to the electrodes 109 based at least on input from the electrode controller 113. The converter controller 114 may receive information about the load voltage U_{L} and load current I_{L}, for example measured by the voltage measurement device 118 and the current measurement device 119. The measured load voltage U_{L} may be used by the converter controller 114 in a feedback loop for the converter reference voltage and output voltage Uₒᵤₜ. The converter controller 114 may further receive information about the supply voltage Us and supply current Is, for example measured by the voltage measurement device 120 and the current measurement device 121.

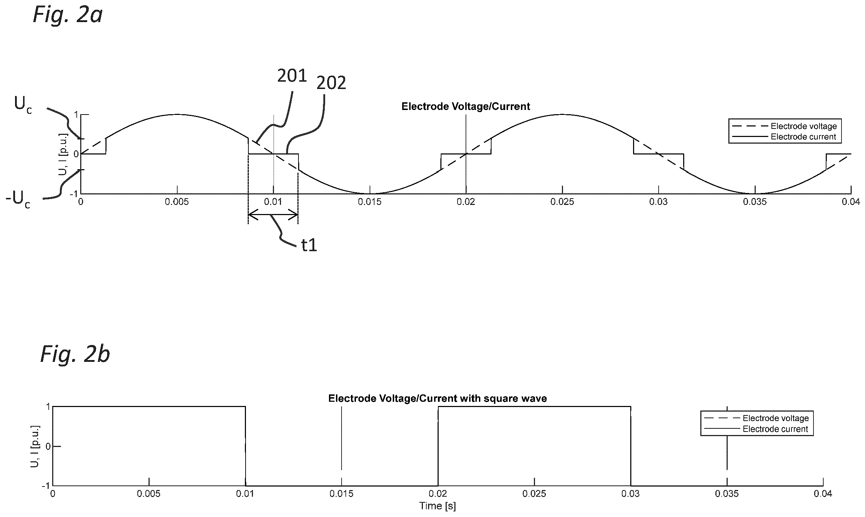

Fig. 2a is a graph showing an example of the theoretical voltage across the electrode and current in the electrode, when the applied voltage has a sinusoidal waveform. Note that the graph of Fig. 2a is simplified to not account for the phase shift due to reactances. The electrode voltage 201 is depicted with a dashed line and the electrode current 202 is depicted with a solid line.

The arc that melts the metal needs a certain voltage in order to ignite. In other words, there is a critical voltage U_{c}, positive or negative, below which no arc is formed. Around each zero-crossing, there is a period of time t1 during which the voltage is low, below the critical voltage U_{c}. During this time, no arc is formed, and no current is flowing through the electrode.

The periods without arcing reduce the total RMS (root mean square) current, and thereby the corresponding energy in the arc furnace.

Theoretically, a square waveform as shown in Fig. 2b would give the highest efficiency. Note that in Fig. 2b, the curves of the electrode voltage and the electrode current completely overlap, since with a square waveform the electrode voltage theoretically switches instantaneously between the positive peak voltage and the negative peak voltage. Thus, there is no period of time during which the electrode voltage is below the critical voltage. However, the high rate of change du/dt of the voltage around the zero-crossing may cause stress on insulation, especially dry insulated components such as cables and cable terminations, or epoxy-insulated components. This additional stress can result in reduced lifetime of the components, due to its high-frequency content.

It is also desirable to limit the peak voltage, so as to avoid uncontrolled arcs towards the refractory of the EAF. In other words, it may not be desirable to increase the amplitude of the output voltage Uₒᵤₜ, at least in the beginning of the melting cycle when unmelted material may shift inside the EAF. In later stages of the melting cycle, when a larger proportion of the material has melted, a higher voltage may be used.

The converter device is configured to generate an output voltage Uₒᵤₜ comprising a complex waveform comprising alternating pulses, wherein a rise/fall time Tr of said pulses exceed a predetermined rise/fall threshold, and wherein RMS_Uₒᵤₜ > Uₚₑₐₖ/√2, where RMS_Uₒᵤₜ is the root mean square of the output voltage and Uₚₑₐₖ is the peak voltage of the output voltage.

The output voltage Uₒᵤₜ generated by the converter device 101 thus offers advantages in terms of increased energy content of the arc, while limiting the stress on the components. The waveform of the output voltage comprises alternating pulses, i.e., positive and negative, with a controlled rise/fall time. The duration of the pulses is determined by the frequency of the output voltage, as well as the rise/fall time. The rise/fall time will determine the period of time during which the electrode current is below the critical voltage, and is thus advantageously kept as low as possible. At the same time, the rise/fall time, and thus the rate of change of the voltage du/dt, is chosen such that the effect in terms of stress on insulation and lifetime of the converter device and other components is limited.

It is further advantageous for the output voltage to be "smooth", i.e., to avoid sharp corners in the waveform. Such sharp corners may generate high-frequency noise.

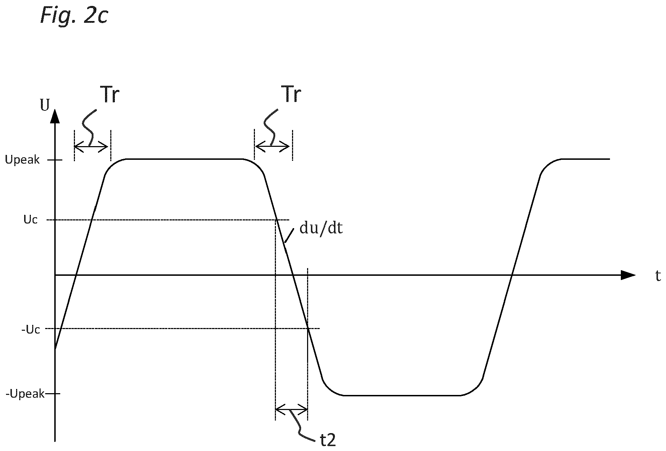

A waveform such as shown in Fig. 2c may be used as a reference waveform.

The waveform may take the form of alternating pulses (positive and negative), with an amplitude corresponding to the desired peak voltage. The rise/fall time Tr is set as described above, with the goal to maximize the RMS voltage, while minimizing the problems associated with too high du/dt. The rise/fall time Tr is marked in Fig. 2c for a positive pulse. The lower the rise/fall time, the closer the waveform would correspond to a square waveform. In the example of Fig. 2c, the non-arcing period t2 is lower than for a sinusoidal waveform having the same peak voltage. Further, the edges between the rise/fall and the flat part at peak voltage are rounded, to avoid high frequency noise associated with sharp edges.

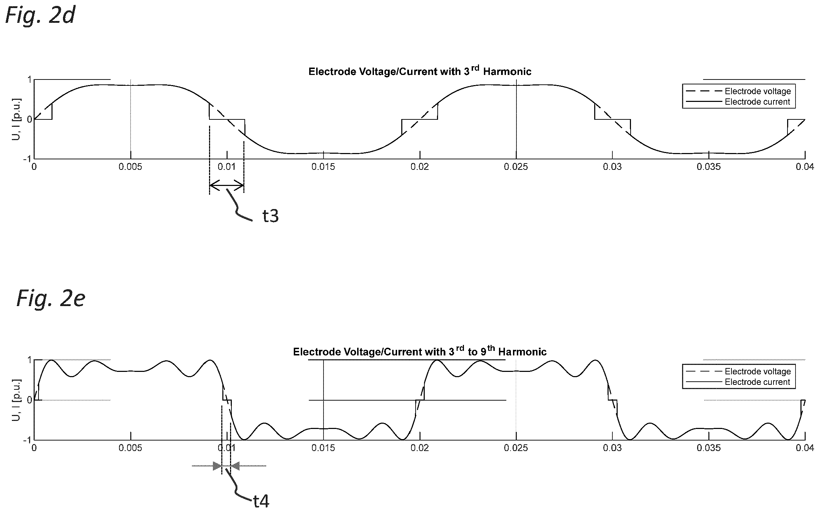

In other embodiments, the output voltage may be obtained by adding harmonics to a fundamental, sinusoidal waveform. Examples of waveforms so obtained are shown in Fig. 2d and 2e.

In Fig. 2d, a 3^{rd} harmonic has been added to the fundamental waveform for the electrode voltage. As can be seen, the waveform is flattened, and the voltage is close to the peak voltage for a longer time than for a sinusoidal waveform having the same peak. The rise/fall time is also shorter than for the sinusoidal waveform, and the non-arcing period t3 is thus shorter than in the example of Fig. 2a.

In Fig. 2e, the 3^{rd} to 9^{th} harmonics have been added to the fundamental waveform for the electrode voltage. Compared to the waveform of Fig. 2d, the amplitude of the fundamental waveform has been further increased, while the peak voltage is still limited thanks to the added harmonics. The rise/fall time, and thus the non-arcing period t4, is further shortened compared to the non-arcing period t3 in Fig. 2d.

When adding harmonics to a fundamental waveform as in Figs. 2d and 2e, the characteristics of the waveform will depend on the amplitude and frequency of the fundamental waveform and on the amplitude of each added harmonic. The phase angle of the respective harmonics may also optionally be adjusted, to obtain different waveforms.

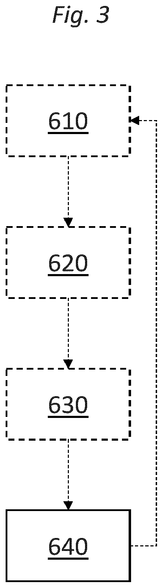

Thus, with reference to Fig. 3, the method of operating an electric arc furnace may comprise, at step 640, generating an output voltage Uₒᵤₜ comprising a complex waveform comprising alternating pulses, wherein a rise/fall time of said pulses exceeds a predetermined rise/fall time threshold, and wherein RMS_Uₒᵤₜ > Uₚₑₐₖ/√2, where RMS_Uₒᵤₜ is the root mean square of the output voltage and Uₚₑₐₖ is the peak voltage of the output voltage.

The method optionally further comprises steps 610, 620, and 630 as follows. The method may comprise, at step 610, receiving, by the converter controller, a reference voltage from the electrode controller. The reference voltage corresponds to a desired voltage in the electrode. At step 620, the converter controller may determine a converter reference voltage based on the received reference voltage and an EAF transformer impedance. The step 620 of determining the converter reference voltage optionally comprises determining a set of parameters selected among a group comprising: the peak voltage Uₚₑₐₖ, the rise/fall time Tr, a fundamental frequency f, an amplitude of a fundamental waveform, one or a plurality of harmonics to be added to said fundamental waveform, and a respective amplitude for each harmonic to be added to said fundamental waveform. At step 630, the converter controller controls the converter device to generate said output voltage Uₒᵤₜ based on the converter reference voltage.

The dashed arrow between step 640 and step 610 signifies that, optionally, the steps of the method are repeated, or continually performed. In particular, the converter reference voltage, or the parameters defining the converter reference voltage, may be changed, updated, or adjusted during the melting process. Optionally, this is performed as a continuous process.

Although features and elements are described in particular combinations, each feature or element may be used alone or without other features and elements or in various combinations with or without other features and elements.

Other variations to the disclosed embodiments can be understood and effected by those skilled in the art in practicing the claimed invention, from a study of the drawings, the disclosure, and the appended claims. In the claims, the word "comprising" does not exclude the presence of other elements or steps, and the indefinite article "a" or "an" before a feature or element does not exclude a plurality of such features or elements. A single processor or other unit may fulfil the functions of several items recited in the claims. The mere fact that certain features are recited in mutually different dependent claims does not indicate that a combination of these features cannot be used to advantage. Any reference signs in the claims should not be construed as limiting the scope.

## Claims

1. An electric power supply apparatus for supplying power to an electric arc furnace, said electric arc furnace comprising at least one electrode, wherein said electric power supply apparatus comprises:
- an electric arc furnace transformer, and
- a converter device having an input side and an output side, which converter device is configured to be connected at said input side to an AC grid and at said output side to said at least one electrode via said electric arc furnace transformer,
wherein said converter device is further configured to generate an output voltage Uₒᵤₜ comprising a complex waveform comprising alternating pulses, wherein a rise/fall time Tr of said pulses exceeds a predetermined rise/fall time threshold, and wherein RMS_Uₒᵤₜ > Uₚₑₐₖ/√2, where RMS_Uₒᵤₜ is the root mean square of the output voltage and Uₚₑₐₖ is the peak voltage of the output voltage.

2. The electric power supply apparatus according to claim 1, wherein said complex waveform is obtained by using a reference waveform.

3. The electric power supply apparatus according to claim 1, wherein said complex waveform is obtained by adding at least a 3^{rd} harmonic to a fundamental waveform.

4. The electric power supply apparatus according to claim 3, wherein said complex waveform comprises a number N of added harmonics and said number N does not exceed a predetermined threshold.

5. The electric power supply apparatus according to claim 4, wherein said predetermined threshold is 15.

6. The electric power supply apparatus according to any one of claims 1 to 5, wherein said converter device is configured to operate with medium voltage AC input.

7. The electric power supply apparatus according to any one of the preceding claims, further comprising a converter controller configured to control said output voltage Uₒᵤₜ, wherein said converter controller is configured to:
- determine a converter reference voltage based at least on a desired electrode voltage and an electric arc furnace transformer impedance, and
- control said converter device to generate said output voltage Uₒᵤₜ based on said converter reference voltage.

8. The electric power supply apparatus according to claim 7, wherein determining said converter reference voltage includes determining a set of parameters selected among a group comprising:
- said peak voltage Uₚₑₐₖ,
- said rise/fall time Tr,
- a fundamental frequency f,
- an amplitude of a fundamental waveform,
- one or a plurality of harmonics to be added to said fundamental waveform, and
- a respective amplitude for each harmonic to be added to said fundamental waveform.

9. The electric power supply apparatus according to claim 8, wherein said set of parameters is variable over time during a melting cycle of said electric arc furnace.

10. The electric power supply apparatus according to any one of the preceding claims, wherein said converter device is configured to operate as a back-to-back converter.

11. The electric power supply apparatus according to any one of claims 1 to 9, wherein said converter device is configured to operate as a matrix converter.

12. A method of operating an electric arc furnace by means of an electric power supply apparatus, said electric arc furnace comprising at least one electrode, wherein said electric power supply apparatus comprises an electric arc furnace transformer and a converter device having an input side and an output side, which converter device is configured to be connected at said input side to an AC grid and at said output side to said at least one electrode via said electric arc furnace transformer, the method comprising:
- generating, by means of said converter device, an output voltage Uₒᵤₜ comprising a complex waveform comprising alternating pulses, wherein a rise/fall time Tr of said pulses exceeds a predetermined rise/fall time threshold, and wherein RMS_Uₒᵤₜ > Uₚₑₐₖ/√2, where RMS_Uₒᵤₜ is the root mean square of the output voltage and Uₚₑₐₖ is the peak voltage of the output voltage.

13. The method according to claim 12, wherein said complex waveform is obtained by using a reference waveform.

14. The method according to claim 12, wherein said complex waveform is obtained by adding at least a 3^{rd} harmonic to a fundamental waveform.

15. The method according to claim 14, wherein said complex waveform comprises a number N of added harmonics and said number N does not exceed a predetermined threshold.
